# FASCICULE DE BREVET EUROPEEN

(11) **EP 3 294 575 B1**
(45) Date de publication et mention de la délivrance du brevet: **15.04.2020**
(21) Numéro de dépôt: 16722114.2
(22) Date de dépôt: 03.05.2016
(51) Int. Cl.: B60C 15/02, B60C 5/16, B60C 9/02

(54) **ADAPTATEUR POUR ENSEMBLE ROULANT ET ENSEMBLE ROULANT LE COMPRENANT**
ADAPTER FÜR EINE ROLLENDE ANORDNUNG UND ROLLENDE ANORDNUNG DAMIT
ADAPTOR FOR A ROLLING ASSEMBLY AND ROLLING ASSEMBLY COMPRISING SAME

(30) Priorité: 12.05.2015 FR 1554218
(43) Date de publication de la demande: 21.03.2018
(73) Titulaire: Compagnie Générale des Etablissements Michelin, 63000 Clermont-Ferrand (FR)
(72) Inventeur: AHOUANTO, Michel, 63530 Enval (FR); DAVAL, Bertrand, 63040 Clermont-Ferrand Cedex 9 (FR); TOPIN, Arthur, 63040 Clermont-Ferrand Cedex 9 (FR); PINEAU, Jacky, 63040 Clermont-Ferrand Cedex 9 (FR)
(74) Mandataire: Bauvir, Jacques
(86) Numéro de dépôt international: PCT/EP2016/059830
(87) Numéro de publication internationale: WO 2016/180667

(56) Documents cités:
- WO-A1-2014/005970
- GB-A- 2 085 375

## Description

L'invention a pour objet un adaptateur pour un ensemble roulant destiné à équiper un véhicule de tourisme. Elle a également pour objet ledit ensemble roulant, constitué par un pneumatique, une jante et deux adaptateurs assurant la liaison entre les deux bourrelets du pneumatique et la jante.

Un pneumatique étant une structure torique ayant pour axe de révolution son axe de rotation, il peut être décrit dans un plan radial passant par son axe de rotation. Dans ce qui suit, pour tout plan radial, les directions radiale, axiale et circonférentielle désignent respectivement les directions perpendiculaire à l'axe de rotation du pneumatique, parallèle à l'axe de rotation du pneumatique et perpendiculaire au plan radial. Le plan équatorial désigne le plan passant par le milieu de la bande roulement et perpendiculaire à l'axe de rotation du pneumatique. On appelle coupe radiale toute coupe du pneumatique selon un plan radial.

De façon générale, un pneumatique comprend une bande de roulement, destinée à entrer en contact avec un sol, deux flancs prolongeant radialement vers l'intérieur les extrémités axiales de la bande de roulement et deux bourrelets prolongeant radialement vers l'intérieur les deux flancs et destinés à entrer en contact avec une jante.

Dans le document WO 00/78565 il est proposé d'insérer un adaptateur élastique, entre un bourrelet de pneumatique et une jante. Un tel adaptateur comprend, axialement de l'intérieur vers l'extérieur, une extrémité axialement intérieure appelée bourrelet d'adaptateur comprenant un élément de renfort intérieur et destinée à assurer l'accrochage de l'adaptateur sur la jante, une extrémité axialement extérieure comprenant un élément de renfort extérieur et destinée à recevoir un bourrelet de pneumatique, et un corps reliant les deux extrémités respectivement axialement intérieure et axialement extérieure. L'élément de renfort extérieur comprend une première portion sensiblement radiale, située à l'intérieur de l'extrémité axialement extérieure, et une deuxième portion sensiblement axiale, située à l'intérieur du corps, les première et deuxième portions étant sensiblement perpendiculaires entre elles et formant un ensemble continu.

Un tel adaptateur permet de monter un pneumatique sur une jante plus étroite que celle recommandée par les normes usuelles, telles que, par exemple, la norme ETRTO (European Tyre and Rim Technical Organisation).

Un ensemble roulant, équipé d'un adaptateur tel que décrit dans le document précédemment cité, assure les principales fonctions d'un ensemble roulant classique, dans lequel le pneumatique est monté directement sur sa jante recommandée, et garantit notamment une réponse en poussée de dérive lors de l'application d'un angle de dérive, c'est-à-dire de l'application d'une rotation autour d'une direction radiale, avec une flexibilité suffisante pour éviter toute dégradation de l'ensemble roulant.

Toutefois un tel adaptateur de l'état de la technique a une déformabilité insuffisante pour pouvoir absorber de grandes déformations générés par des chocs subis par l'ensemble roulant contre des obstacles, tels que des bordures de trottoirs, ou dans des trous formés dans la chaussée, tels que des nids de poule. Ce type de choc est communément appelé « Pinch Shock » ou choc pincement.

En outre, le montage de l'adaptateur de l'état de la technique précédemment décrit, c'est-à-dire sa mise en place entre le pneumatique et la jante, n'est pas très aisé. A titre d'exemple, dans le cas d'un ensemble roulant comprenant un seul adaptateur assurant la liaison d'un premier bourrelet avec la jante, le deuxième bourrelet, axialement opposé au premier bourrelet, étant monté directement sur la jante, la procédure de montage est la suivante. Dans une première étape, l'extrémité axialement intérieure de l'adaptateur est montée sur la jante. Dans une deuxième étape, avant de monter le premier bourrelet du pneumatique au niveau de l'extrémité axialement extérieure de l'adaptateur, l'adaptateur doit être déformé selon une direction sensiblement axiale, pour permettre le montage du deuxième bourrelet, directement sur la jante. Or, l'élément de renfort extérieur, et en particulier sa deuxième portion sensiblement axiale et intérieure au corps, rigidifie axialement le corps à proximité de l'extrémité axialement extérieure et limite ainsi la déformation axiale de l'adaptateur, ce qui peut gêner le montage du deuxième bourrelet directement sur la jante.

On connaît par ailleurs le document GB 2085375A qui divulgue un adaptateur ayant les caractéristiques techniques du préambule de la revendication 1.

Aussi les inventeurs se sont donnés pour objectif d'améliorer la montabilité d'un adaptateur pour ensemble roulant, destiné à relier un bourrelet de pneumatique à une jante, en garantissant une bonne capacité de l'adaptateur à absorber de grandes déformations en cas de chocs pincement.

L'invention a donc pour objet un adaptateur pour ensemble roulant, ledit ensemble roulant ayant un axe de rotation et comprenant un pneumatique ayant deux bourrelets, une jante ayant deux rebords de jante et deux adaptateurs destinés chacun à assurer la jonction entre l'un des bourrelets et la jante,
ledit adaptateur comprenant :
- une extrémité axialement intérieure destinée à être montée sur un rebord de jante et comprenant un élément de renfort intérieur et une face axialement extérieure sensiblement radiale,
- une extrémité axialement extérieure destinée à entrer en contact avec un bourrelet et comprenant un élément de renfort extérieur et une face axialement intérieure ou face d'appui sensiblement radiale,
- un corps sensiblement axial connectant ladite extrémité axialement extérieure avec ladite extrémité axialement intérieure, de manière à former une pièce unitaire,
- le corps comprenant au moins une armature de renforcement principale assurant la liaison entre l'élément de renfort extérieur et l'élément de renfort intérieur, l'armature de renforcement principale comprenant au moins une couche de renforts parallèles entre eux,
- le corps comprenant un siège d'adaptateur, destiné à recevoir le bourrelet et situé à proximité de l'extrémité axialement extérieure,
l'élément de renfort de l'extrémité axialement extérieure étant en totalité situé axialement à l'extérieur de la face d'appui et radialement à l'extérieur du siège d'adaptateur,
l'armature de renforcement principale comprenant une superposition radiale d'au moins deux couches de renforts, lesdits renforts étant parallèles entre eux dans une même couche et croisés entre eux d'une couche à la suivante,
et chacune des couches de l'armature de renforcement principale du corps comprenant des renforts formant, avec une direction circonférentielle du pneumatique, un angle au moins égal à 30°, et enrobés par un matériau polymérique ayant un module d'élasticité à 10% d'allongement au plus égal à 70 MPa.

La première caractéristique essentielle d'un adaptateur, selon l'invention, est un élément de renfort extérieur, positionné axialement intégralement à l'extérieur de la face d'appui, donc à l'extérieur du corps d'adaptateur. Par conséquent, l'élément de renfort extérieur ne rigidifie pas axialement le corps et ne limite donc pas sa déformabilité axiale.

La deuxième caractéristique essentielle est une armature de renforcement principale, comprenant une superposition radiale d'au moins deux couches de renforts, lesdits renforts étant parallèles entre eux dans une même couche et croisés entre eux d'une couche à la suivante , et chaque couche étant constituée par des renforts formant, avec la direction circonférentielle, un angle au moins égal à 30°, ces renforts étant enrobés dans un matériau polymérique ayant un module d'élasticité à 10% d'allongement au plus égal à 70 MPa.

L'armature de renforcement principale est en effet constituée par l'enroulement d'une couche de renforts respectivement autour de l'élément de renfort extérieur et de l'élément de renfort intérieur. Il en résulte une superposition radiale d'au moins deux couches dans le corps : deux couches s'il n'a pas de superposition des extrémités de l'enroulement, 3 couches s'il y a superposition des extrémités de l'enroulement. L'angle formé par les renforts d'une couche, avec la direction circonférentielle, est donné en valeur absolue, sachant que, compte tenu du principe de fabrication retenu pour l'armature de renforcement principale, le signe de l'angle s'inverse lors du passage d'une couche à la suivante.

Le fait d'avoir une valeur seuil minimale pour l'angle des renforts garantit une rigidité axiale minimale de l'adaptateur, nécessaire à la rigidité de dérive attendue pour l'ensemble roulant. Un module d'élasticité à 10% d'allongement pour le matériau polymérique d'enrobage inférieur à une valeur seuil maximale garantit la déformabilité axiale de l'adaptateur.

La combinaison de ces caractéristiques essentielles permet ainsi d'avoir un adaptateur suffisamment souple axialement pour pouvoir être monté facilement, avec une bonne capacité à absorber de grandes déformations en cas de chocs pincement.

Selon un mode de réalisation préféré, les renforts des couches de l'armature de renforcement principale forment, avec la direction circonférentielle du pneumatique, un angle au moins égal à 35° et au plus égal à 50°.

En-deçà de 35° et lorsque l'angle se rapproche de 0°, les inventeurs ont constaté une stabilité dimensionnelle insuffisante de l'adaptateur. La largeur axiale de celui-ci va en effet augmenter sous l'effet de la pression de gonflage du pneumatique, en raison du fait que les tensions générées dans l'adaptateur ne sont reprises que dans la direction non principale.

Au-delà de 50° et lorsque l'angle se rapproche de 90°, il y a une diminution de la rigidité en torsion de l'adaptateur et, par conséquent, une perte de rigidité de dérive de l'ensemble roulant, par rapport à un ensemble roulant standard sans adaptateur.

Avantageusement, les renforts de chacune des couches de l'armature de renforcement principale du corps comprennent un matériau textile tel qu'un polyamide aromatique ou aramide, un polyamide aliphatique ou nylon, un polyester tel qu'un polyéthylène-téréphtalate (PET) ou un polyéthylène-naphténate (PEN), une polycétone ou un matériau textile cellulosique tel que la rayonne.

Egalement avantageusement, les renforts de chacune des couches de l'armature de renforcement principale du corps comprennent une combinaison d'au moins deux matériaux textiles distincts. De tels renforts sont appelés renforts hybrides.

Le matériau polymérique enrobant les renforts des couches de l'armature de renforcement principale est encore préférentiellement un mélange élastomérique.

L'armature de renforcement principal dudit corps peut avoir un module d'élasticité en extension supérieur ou égal à 4GPa.

Le corps ayant une largeur axiale L, mesurée entre la face axialement intérieure de l'extrémité axialement extérieure et la face axialement extérieure de l'extrémité axialement intérieure, la largeur axiale L du corps est avantageusement au moins égale à 2.54 cm et au plus égale à 8 cm.

De préférence, la largeur axiale L du corps est au moins égale à 3.17 cm et au plus égale à 5.10 cm.

En ce qui concerne l'extrémité axialement extérieure de l'adaptateur, l'élément de renfort extérieur peut être constitué, à titre d'exemples et de manière non exhaustive, en métal tel que l'acier, en polyamide aliphatique tel que le nylon, en polyamide aliphatique tel que l'aramide, en polyester tel que le polyéthylène-téréphtalate (PET). Il peut également avoir une structure composite comprenant une matrice en résine renforcée par fibres de renforcement, telles que, par exemple, des fibres de nylon, d'aramide, de polyéthylène-téréphtalate (PET), de polyéthylène-naphténate (PEN), de polyvinyl alcool (PVA), de rayonne, de verre de carbone, de basalte.

Un autre objet de l'invention est un ensemble roulant comprenant, pour chaque bourrelet du pneumatique, un adaptateur selon l'une quelconque des modes de réalisation de l'invention précédemment décrits.

Selon une première variante, l'ensemble roulant selon l'invention comprend un premier et un second adaptateur ayant des corps de largeurs axiales L différentes. Les adaptateurs sont alors dits dissymétriques.

Selon une seconde variante préférée, l'ensemble roulant selon l'invention comprend un premier et un second adaptateur ayant des corps de largeurs axiales L identiques. Les adaptateurs sont alors dits dissymétriques.

L'ensemble roulant peut ne comprendre qu'un seul l'adaptateur, disposé sur un seul côté de la jante, et préférentiellement du côté extérieur du véhicule. Dans ce cas, la jante possède une forme géométrique dissymétrique de manière à s'adapter à la présence de l'adaptateur présent sur un seul côté.

L'invention est décrite ci-après à l'aide des figures 1 à 3, non nécessairement à l'échelle et sont donnés uniquement à titre d'illustration :
- figure 1 : coupe radiale d'un adaptateur de l'état de la technique monté sur un ensemble roulant,
- figure 2 : coupe radiale d'un adaptateur selon l'invention non monté sur un ensemble roulant,
- figure 3 : coupe radiale d'un ensemble roulant comprenant deux adaptateurs selon l'invention.

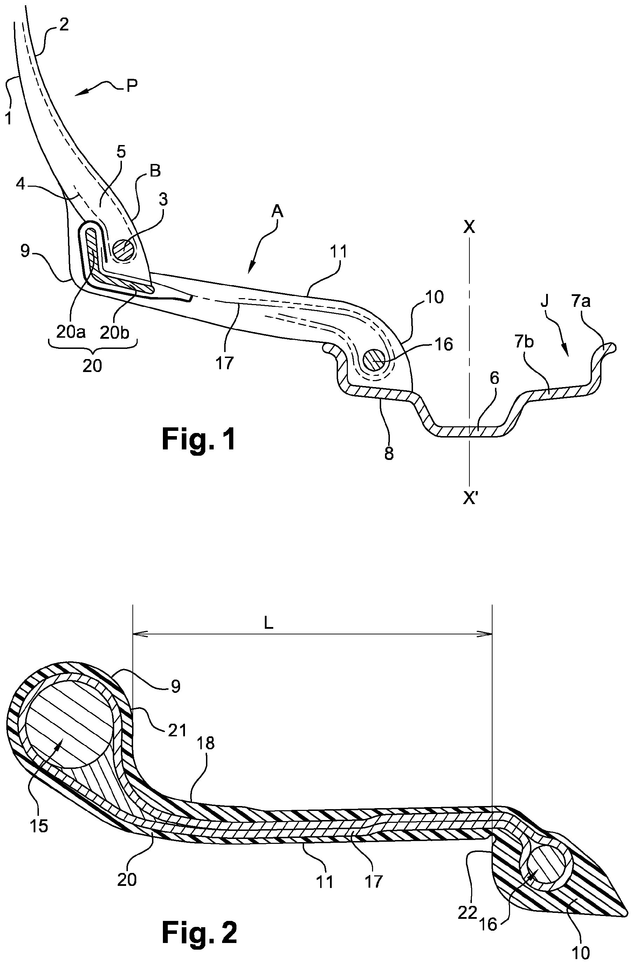

La figure 1 représente une coupe radiale d'un adaptateur de l'état de la technique monté sur un ensemble roulant. L'adaptateur A est positionné entre le bourrelet B d'un pneumatique P (partiellement représenté) et une jante J. La coupe radiale partielle du pneumatique P présente principalement un flanc 1 et l'armature de carcasse 2 s'enroulant autour d'une tringle 3 pour former un retournement 4 séparé de l'armature de carcasse 2 par un élément de remplissage 5. Le bourrelet B du pneumatique P est en appui sur l'adaptateur A. La jante J comprend, dans une portion médiane, une gorge de montage 6, destinée à faciliter le montage du bourrelet B du pneumatique P, et, à ses extrémités axiales, deux rebords de jante 8 comprenant chacun une portion sensiblement radiale ou crochet de jante 7a et une portion sensiblement axiale ou siège de jante 7b.

L'adaptateur A de l'état de la technique de la figure 1 comprend :
- une extrémité axialement intérieure 10 destinée à être montée sur un rebord de jante 8 et comprenant un élément de renfort intérieur 16,
- une extrémité axialement extérieure 9 destinée à entrer en contact avec un bourrelet B et comprenant un élément de renfort extérieur 20 comprenant une portion sensiblement radiale 20a et une portion sensiblement axiale 20b,
- un corps 11 sensiblement axial connectant ladite extrémité axialement extérieure 9 avec ladite extrémité axialement intérieure 10, de manière à former une pièce unitaire,
- le corps 11 comprenant au moins une armature de renforcement principale 17 assurant la liaison entre l'élément de renfort extérieur 20 et l'élément de renfort intérieur 16, l'armature de renforcement principale 17, comprenant au moins une couche de renforts parallèles entre eux.

La figure 2 représente une coupe radiale d'un adaptateur selon l'invention non monté sur un ensemble roulant. Cet adaptateur comprend une extrémité axialement extérieure 9 comprenant un élément de renfort extérieur 15, une extrémité axialement intérieure 10 comprenant un élément de renfort intérieur 16, et un corps 11 comprenant une armature de renforcement principale 17. L'armature de renforcement principale 17 est constituée par une seule couche de renforcement qui s'enroule respectivement autour de l'élément de renfort intérieur 16 de l'extrémité axialement intérieure 10 et autour de l'élément de renfort extérieur 15 de l'extrémité axialement extérieure 9. Au niveau du corps 11, les portions aller et retour de ladite couche de renforcement constitue ainsi un empilement sensiblement radial d'au moins deux couches de renforcement. L'armature de renforcement principale 17 est enveloppée par une couche de matériau élastomérique 20. Le corps 11 comprend en outre un siège d'adaptateur 18 destiné à entrer en contact avec un bourrelet de pneumatique. Le corps 11 a une largeur axiale L, mesurée entre la face axialement intérieure 21 de l'extrémité axialement extérieure 9 et la face axialement extérieure 26 de l'extrémité axialement intérieure 10. Le corps 11 comprend également un renfort annulaire de siège 19, radialement extérieur à l'armature de renforcement principale 17 et axialement intérieur à l'extrémité axialement extérieure 9. L'élément de renfort extérieur 15, dont la coupe radiale est représentée schématiquement par un disque hachuré, n'a pas une section radiale nécessairement pleine : le disque hachuré représente l'encombrement du renfort extérieur 15 et non sa structure interne.

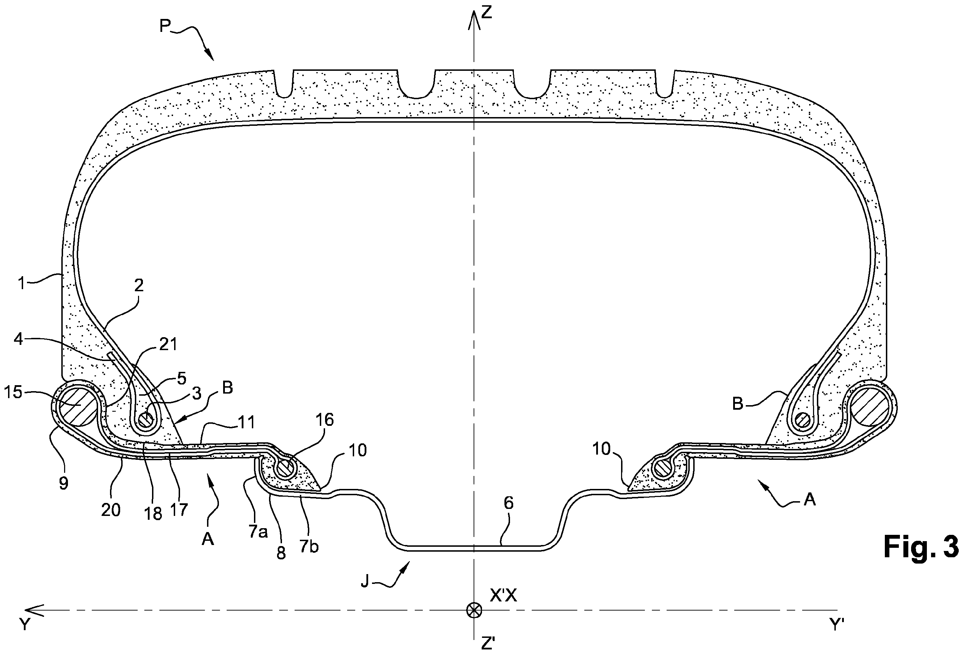

La figure 3 présente une coupe radiale, dans un plan YZ, d'un ensemble roulant comprenant un pneumatique P, une jante J et, pour chaque bourrelet B, un adaptateur A assurant la jonction entre le bourrelet B et la jante J. Le pneumatique P comprend une bande de roulement (non référencée) prolongée radialement vers l'intérieur par deux flancs 1, eux-mêmes prolongés radialement vers l'intérieur par deux bourrelets B. Dans chaque bourrelet B, l'armature de carcasse 2 s'enroule autour d'un élément de renforcement circonférentiel ou tringle 3, pour former un retournement 4 séparé de l'armature de carcasse 2 par un élément de remplissage 5. La jante J comprend, dans une portion médiane, une gorge de montage 6, destinée à faciliter le montage des bourrelets B du pneumatique P, et, à ses extrémités axiales, deux rebords de jante 8 comprenant chacun une portion sensiblement radiale ou crochet de jante 7a et une portion sensiblement axiale ou siège de jante 7b. L'adaptateur A comprend une extrémité axialement intérieure 10 comprenant un élément de renfort intérieur 16 et destinée à être montée sur un rebord de jante 8, une extrémité axialement extérieure 9 comprenant un élément de renfort extérieur 15 et destinée à entrer en contact par une face axialement intérieure, sensiblement radiale, ou face d'appui 21, avec un bourrelet B, et enfin un corps 11, connectant l'extrémité axialement extérieure 9 avec l'extrémité axialement intérieure 10 de manière à former une pièce unitaire, comprenant au moins une armature de renforcement principale 17 assurant la liaison entre l'élément de renfort extérieur 15 et l'élément de renfort intérieur 16, et comprenant un siège d'adaptateur 18 sensiblement axial destiné à entrer en contact avec un bourrelet B.

De façon plus générale, l'armature de renforcement principale de l'adaptateur peut être constituée par un matériau orthotrope ayant une direction principale de rigidité maximale formant un angle au moins égal à 30° avec la direction circonférentielle.

## Revendications

1. Adaptateur (A) pour ensemble roulant, ledit ensemble roulant ayant un axe de rotation et comprenant un pneumatique (P) ayant deux bourrelets (B), une jante (J) ayant deux rebords de jante (8) et deux adaptateurs (A) destinés chacun à assurer la jonction entre l'un des bourrelets (B) et la jante (J),
ledit adaptateur (A) comprenant :
- une extrémité axialement intérieure (10) destinée à être montée sur un rebord de jante (8) et comprenant un élément de renfort intérieur (16) et une face axialement extérieure (22) sensiblement radiale,
- une extrémité axialement extérieure (9) destinée à entrer en contact avec un bourrelet (B) et comprenant un élément de renfort extérieur (15) et une face axialement intérieure ou face d'appui (21) sensiblement radiale,
- un corps (11) sensiblement axial connectant ladite extrémité axialement extérieure (9) avec ladite extrémité axialement intérieure (10), de manière à former une pièce unitaire,
- le corps (11) comprenant au moins une armature de renforcement principale (17) assurant la liaison entre l'élément de renfort extérieur (15) et l'élément de renfort intérieur (16), l'armature de renforcement principale (17) comprenant au moins une couche de renforts parallèles entre eux,
- le corps (11) comprenant un siège d'adaptateur (18), destiné à recevoir le bourrelet (B) et situé à proximité de l'extrémité axialement extérieure (9), l'élé
ment de renfort (15) de l'extrémité axialement extérieure (9) étant en totalité situé axialement à l'extérieur de la face d'appui (21) et radialement à l'extérieur du siège d'adaptateur (18), **caractérisé en ce que** l'armature de renforcement principale (17) comprend une superposition radiale d'au moins deux couches de renforts, lesdits renforts étant parallèles entre eux dans une même couche et croisés entre eux d'une couche à la suivante **et en ce que** chacune des couches de l'armature de renforcement principale (17) du corps (11) comprend des renforts formant, avec une direction circonférentielle (XX') du pneumatique, un angle au moins égal à 30°, et enrobés par un matériau polymérique ayant un module d'élasticité à 10% d'allongement au plus égal à 70 MPa.

2. Adaptateur (A) selon la revendication 1, **dans lequel** les renforts des couches de l'armature de renforcement principale (17) forment, avec la direction circonférentielle (XX') du pneumatique, un angle au moins égal à 35° et au plus égal à 50°.

3. Adaptateur (A) selon l'une des revendications 1 ou 2, **dans lequel** les renforts de chacune des couches de l'armature de renforcement principale (17) du corps (11) comprennent un matériau textile tel qu'un polyamide aromatique ou aramide, un polyamide aliphatique ou nylon, un polyester tel qu'un polyéthylène-téréphtalate (PET) ou un polyéthylène-naphténate (PEN), une polycétone ou un matériau textile cellulosique tel que la rayonne.

4. Adaptateur (A) selon la revendication 3, **dans lequel** les renforts de chacune des couches de l'armature de renforcement principale (17) du corps (11) comprennent une combinaison d'au moins deux matériaux textiles distincts.

5. Adaptateur (A) selon l'une des revendications 1 à 4, **dans lequel** le matériau polymérique enrobant les renforts des couches de l'armature de renforcement principale (17) est un mélange élastomérique.

6. Adaptateur (A) selon l'une des revendications 1 à 5, le corps (11) ayant une largeur axiale L, mesurée entre la face axialement intérieure (21) de l'extrémité axialement extérieure (9) et la face axialement extérieure (22) de l'extrémité axialement intérieure (10), **dans lequel** la largeur axiale L du corps (11) est au moins égale à 2.54 cm et au plus égale à 8 cm.

7. Adaptateur (A) selon la revendication 6, **dans lequel** la largeur axiale L du corps (11) est au moins égale à 3.17 cm et au plus égale à 5.10 cm.

8. Ensemble roulant comprenant, pour chaque bourrelet (B) du pneumatique (P), un adaptateur (A) selon l'une quelconque des revendications 1 à 7.

9. Ensemble roulant selon la revendication 8 comprenant un premier et un second adaptateur ayant des corps (11) de largeurs axiales L différentes.

10. Ensemble roulant selon la revendication 8 comprenant un premier et un second adaptateur ayant des corps (11) de largeurs axiales L identiques.

## Patentansprüche

1. Adapter (A) für eine Fahreinheit, wobei die Fahreinheit eine Drehachse aufweist und einen Reifen (P) mit zwei Wülsten (B), eine Felge (J) mit zwei Felgenhörnern (8) und zwei Adapter (A), die jeweils dazu bestimmt sind, die Verbindung zwischen einem der Wülste (B) und der Felge (J) zu gewährleisten, umfasst,
wobei der Adapter (A) umfasst:
- ein axial inneres Ende (10), das dazu bestimmt ist, an einem Felgenhorn (8) angebracht zu werden, und ein inneres Verstärkungselement (16) und eine im Wesentlichen radiale axial äußere Seite (22) umfasst,
- ein axial äußeres Ende (9), das dazu bestimmt ist, mit einem Wulst (B) in Kontakt zu kommen, und ein äußeres Verstärkungselement (15) und eine im Wesentlichen radiale axial innere Seite oder Auflageseite (21) umfasst,
- einen im Wesentlichen axialen Körper (11), der das axial äußere Ende (9) mit dem axial inneren Ende (10) so verbindet, dass ein einteiliges Stück gebildet wird,
- wobei der Körper (11) mindestens eine Hauptverstärkungsbewehrung (17) umfasst, welche die Verbindung zwischen dem äußeren Verstärkungselement (15) und dem inneren Verstärkungselement (16) gewährleistet, wobei die Hauptverstärkungsbewehrung (17) mindestens eine Schicht aus zueinander parallelen Festigkeitsträgern umfasst,
- wobei der Körper (11) einen Adaptersitz (18) umfasst, der dazu bestimmt ist, den Wulst (B) aufzunehmen, und sich in der Nähe des axial äußeren Endes (9) befindet,
- wobei sich das Verstärkungselement (15) des axial äußeren Endes (9) vollständig axial außerhalb der Auflageseite (21) und radial außerhalb des Adaptersitzes (18) befindet,
**dadurch gekennzeichnet, dass** die Hauptverstärkungsbewehrung (17) eine radiale Überlagerung mindestens zweier Schichten von Festigkeitsträgern umfasst, wobei die Festigkeitsträger in ein und derselben Schicht parallel zueinander sind und sich von einer Schicht zur folgenden überkreuzen, und dadurch, dass jede der Schichten der Hauptverstärkungsbewehrung (17) des Körpers (11) Festigkeitsträger umfasst, die mit einer Umfangsrichtung (XX') des Reifens einen Winkel von mindestens 30° bilden und mit einem Polymermaterial umhüllt sind, das einen Elastizitätsmodul bei 10 % Dehnung von höchstens 70 MPa aufweist.

2. Adapter (A) nach Anspruch 1, wobei die Festigkeitsträger der Schichten der Hauptverstärkungsbewehrung (17) mit der Umfangsrichtung (XX') des Reifens einen Winkel von mindestens 35° und höchstens 50° bilden.

3. Adapter (A) nach einem der Ansprüche 1 oder 2, wobei die Festigkeitsträger jeder der Schichten der Hauptverstärkungsbewehrung (17) des Körpers (11) ein Textilmaterial umfassen, wie etwa ein aromatisches Polyamid oder Aramid, ein aliphatisches Polyamid oder Nylon, ein Polyester wie etwa ein Polyethylenterephthalat (PET) oder ein Polyethylennaphthalat (PEN), ein Polyketon oder ein cellulosisches Textilmaterial wie etwa Kunstseide.

4. Adapter (A) nach Anspruch 3, wobei die Festigkeitsträger jeder der Schichten der Hauptverstärkungsbewehrung (17) des Körpers (11) eine Kombination von mindestens zwei verschiedenen Textilmaterialien umfassen.

5. Adapter (A) nach einem der Ansprüche 1 bis 4, wobei das Polymermaterial, das die Festigkeitsträger der Schichten der Hauptverstärkungsbewehrung (17) umhüllt, eine Elastomermischung ist.

6. Adapter (A) nach einem der Ansprüche 1 bis 5, wobei der Körper (11) eine axiale Breite L aufweist, gemessen zwischen der axial inneren Seite (21) des axial äußeren Endes (9) und der axial äußeren Seite (22) des axial inneren Endes (10), wobei die axiale Breite L des Körpers (11) mindestens 2,54 cm und höchstens 8 cm beträgt.

7. Adapter (A) nach Anspruch 6, wobei die axiale Breite L des Körpers (11) mindestens 3,17 cm und höchstens 5,10 cm beträgt.

8. Fahreinheit, welche für jeden Wulst (B) des Reifens (P) einen Adapter (A) nach einem der Ansprüche 1 bis 7 umfasst.

9. Fahreinheit nach Anspruch 8, welche einen ersten und einen zweiten Adapter umfasst, die Körper (11) mit unterschiedlichen axialen Breiten L aufweisen.

10. Fahreinheit nach Anspruch 8, welche einen ersten und einen zweiten Adapter umfasst, die Körper (11) mit identischen axialen Breiten L aufweisen.

## Claims

1. Adapter (A) for a rolling assembly, the said rolling assembly having an axis of rotation and comprising a tyre (P) having two beads (B), a rim (J) having two rim bead seats (8) and two adapters (A) each intended to provide the connection between one of the beads (B) and the rim (J),
the said adapter (A) comprising:
- an axially inner end (10) intended to be mounted on a rim bead seat (8) and comprising an inner reinforcing element (16) and a substantially radial axially outer face (22),
- an axially outer end (9) intended to come into contact with a bead (B) and comprising an outer reinforcing element (15) and a substantially radial axially inner face or bearing face (21),
- a substantially axial body (11) connecting the said axially outer end (9) to the said axially inner end (10) so as to form a single piece,
- the body (11) comprising at least a main reinforcement (17) providing the connection between the outer reinforcing element (15) and the inner reinforcing element (16), the main reinforcement (17) comprising at least one layer of mutually parallel reinforcers,
- the body (11) comprising an adapter seat (18) intended to receive the bead (B) and situated near the axially outer end (9),
the reinforcing element (15) of the axially outer end (9) being wholly situated axially on the outside of the bearing face (21) and radially on the outside of the adapter seat (18), **characterized in that** the main reinforcement (17) comprises a radial superposition of at least two layers of reinforcers, the said reinforcers being mutually parallel within one and the same layer and crossed with one another from one layer to the next, **and in that** each of the layers of the main reinforcement (17) of the body (11) comprises reinforcers which make, with a circumferential direction (XX') of the tyre, an angle at least equal to 30°, and coated with a polymer material having an elastic modulus at 10% elongation at most equal to 70 MPa.

2. Adapter (A) according to Claim 1, **in which** the reinforcers of the layers of the main reinforcement (17) form, with the circumferential direction (XX') of the tyre, an angle at least equal to 35° and at most equal to 50°.

3. Adapter (A) according to either one of Claims 1 and 2, **in which** the reinforcers of each of the layers of the main reinforcement (17) of the body (11) comprise a textile material such as an aromatic polyamide or aramid, an aliphatic polyamide or nylon, a polyester such as a polyethylene terephthalate (PET) or a polyethylene naphthenate (PEN), a polyketone or a cellulose-based textile material such as rayon.

4. Adapter (A) according to Claim 3, **in which** the reinforcers of each of the layers of the main reinforcement (17) of the body (11) comprise a combination of at least two distinct textile materials.

5. Adapter (A) according to one of Claims 1 to 4, **in which** the polymer material with which the reinforcers of the layers of the main reinforcement (17) are coated is an elastomeric compound.

6. Adapter (A) according to one of Claims 1 to 5, the body (11) having an axial width L, measured between the axially inner face (21) of the axially outer end (9) and the axially outer face (22) of the axially inner end (10), **in which** the axial width L of the body (11) is at least equal to 2.54 cm and at most equal to 8 cm.

7. Adapter (A) according to Claim 6, **in which** the axial width L of the body (11) is at least equal to 3.17 cm and at most equal to 5.10 cm.

8. Rolling assembly comprising, for each bead (B) of the tyre (P), an adapter (A) according to any one of Claims 1 to 7.

9. Rolling assembly according to Claim 8 comprising a first and a second adapter having bodies (11) of different axial widths L.

10. Rolling assembly according to Claim 8 comprising a first and a second adapter having bodies (11) of identical axial widths L.
